(19) Europäisches Patentamt / European Patent Office / Office européen des brevets

(11) EP 2 372 339 B1

(12) EUROPEAN PATENT SPECIFICATION

(45) Date of publication and mention
of the grant of the patent:
**16.03.2016 Bulletin 2016/11**

(51) Int Cl.:
**G01N 3/46** (2006.01)          **G01N 21/88** (2006.01)
G01J 3/46 (2006.01)          G01N 3/06 (2006.01)

(21) Application number: **10172070.4**

(22) Date of filing: **05.08.2010**

(54) **Quantitative evaluation of scratch-induced damages on polymeric and coating materials**

Quantitative Beurteilung von durch Kratzer verursachten Schäden auf Polymer- und Beschichtungsmaterialien

Évaluation quantitative des dommages induits par les rayures sur les matériaux polymériques et de revêtement

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **05.04.2010 KR 20100030986**

(43) Date of publication of application:
**05.10.2011 Bulletin 2011/40**

(73) Proprietor: **KOREA RESEARCH INSTITUTE OF CHEMICAL TECHNOLOGY
Daejeon, 305-343 (KR)**

(72) Inventors:
• **Weon, Jong Il**
  **142-100, Seoul (KR)**
• **Song, Si Yong**
  **305-768, Daejeon (KR)**
• **Lee, Jong Bae**
  **305-761, Daejeon (KR)**
• **Choi, Kil Yeong**
  **305-768, Daejeon (KR)**
• **Lee, Sung Goo**
  **305-755, Daejeon (KR)**
• **Lee, Jae Heung**
  **305-768, Daejeon (KR)**

(74) Representative: **Schwarz, Thomas
Charrier Rapp & Liebau
Patentanwälte
Fuggerstrasse 20
86150 Augsburg (DE)**

(56) References cited:
**JP-A- 2005 300 265    US-A1- 2008 285 840**

• **J-I WEON ET AL: "Quantitative determination of scratch-induced damage visibility on polymer surfaces", JOURNAL OF MATERIALS SCIENCE, KLUWER ACADEMIC PUBLISHERS, BO, vol. 45, no. 10, 3 February 2010 (2010-02-03), pages 2649-2654, XP019790817, ISSN: 1573-4803**

Remarks:
The file contains technical information submitted after the application was filed and not included in this specification

Description

## TECHNICAL FIELD

The present invention is related to a method for quantitative evaluation of scratch-induced damage on polymeric and coating materials, and in particular, to a method allowing quantitative evaluation of damage caused by mar and scratch on the surface of polymeric and coating materials.

## BACKGROUND

Recently, there are significant interests in improving scratch damages of polymeric and coating materials because they are more susceptible to scratch damages on the surface than metals. In general, scratches are regarded as visible surface damages and grooves that the human eyes can perceive. It is well known that a number of factors such as scratch mode, scratch velocity, surface hardness, surface roughness, temperature, scratch tip geometry, fillers and additives have effects on the scratch behaviors. Especially, although mar and scratch-induced damages on the material surface are visually perceivable, it is rather troublesome to accurately and quantitatively evaluate the surface damage.

The current evaluation standards including ASTM (D7027-05) and ISO (19252:2008) introduce quantitative evaluation of scratch-induced surface damage of materials. But, these standard methods emphasize only the methodological aspects of scratch formation based on experiments.

For example, ISO 19252 evaluates scratch-induced surface damage, based on the apparent shape of the trace of a scratch tip, such as ploughing, wedge formation, and cutting.

However, since such a surface damage evaluation method is subjective and dependent on the competency of the observer, the obtained results may be not reproducible, meaningful while not ensuring objectivity.

Mars occur when a relatively low force is applied to a material surface. If the load is increased beyond a certain limit, whitening phenomenon occurs. According to ASTM D7027-05, the normal force at this time point, referred to as a critical normal force, is measured to quantitatively evaluate the surface damage.

However, since the critical normal force is not a normalized value. They are scratch tip geometry dependent. In other words, a new value (i.e., material property) that normalized by the corresponding contact area, similar to the definition of yield stress (N/m$^2$) and impact resistance (J/m), needs to be expressed to quantify the whitening point and the initiation of cutting. Therefore, there are some problems on the reproducibility, objectivity, reliability and discrimination of results. In this context, the critical normal force is not appropriate as a factor of the quantification.

Accordingly, a more effective and quantitative evaluation method for evaluating scratch-induced surface damage of a material is required.

J-I Weon et al., J. of Materials Sci., vol. 45, no. 10, p. 2649-2654 discloses a method for the quantitative evaluation of scratch-induced damage formed on the surface of polymeric and coating materials by an increasing force and determining the onset of scratch visibility. JP2005300265 (A) discloses a method where the color difference between the surface color of the surface having no flaw of an object having a flaw on the surface and the surface color of the surface including the flaw is measured, and a logarithmic value of the acquired color difference is used as an evaluation index.

## SUMMARY

The present invention was made to solve the foregoing problems of the existing evaluation method of scratch-induced surface damage formed on the surface of polymeric and coating materials. The present invention as defined in the claims is provided with a method for
quantitative evaluation of scratch-induced damage on polymeric and coating materials having superiority in objectivity, reliability, reproducibility, or the like, in which a scratch is made using a scratch tip capable of area-contact or line-contact with a material surface in order to measure or analyze the degree of surface damage caused by the scratch through a scratch test under a constant force condition, and the degree of surface damage is represented by corresponding color coordinates or color difference to give a quantitated result.

In one aspect, the present invention provides a method for quantitative evaluation of scratch-induced damage formed on the surface of polymeric and coating materials, as defined in claim 1.

The scratch damage may be formed on the surface of the test specimen using a scratch tip capable of area-contact or line-contact.

Preferably, the scratch damage may be formed by applying a constant force to the surface of the test specimen.

The step of representing the scratch damage as corresponding color coordinates comprises steps of: obtaining an image by scanning the scratch damage formed on the surface of the test specimen; and representing color values of the obtained image as color coordinates of a 2-dimensional (2D) or 3D color model using a color analysis software.

The step of representing the scratch damage as corresponding color coordinates is conducted by using a color analysis profiler.

A color analysis technique using a 2D or 3D color model may be used to analyze the scratch damage formed on the surface of the test specimen.

Preferably, the scratch damage may be in a form of simple damage, in which scratches are formed along one direction, or be in a form of complex damage, in which further scratches having another direction with the simple damage is added to the simple damaged test specimen.

Preferably, the color analysis software may be one capable of performing color analysis as a whole or as a part of the surface damage area of the test specimen.

Preferably, the color analysis software is capable of performing continuous measurement on the width and length of the whole scratch formed on the surface of the test specimen.

Preferably, when a scratch tip is in line-contact with the surface of the test specimen, the color analysis software may represent the color coordinates of each row j of the image corresponding to the scratch direction as an average value of all the color coordinate values of the row j.

In case of area-contact between the scratch tip and the surface of the test specimen, the scratch damage index is represented on the basis of degree of scratch damage ($\Delta D$) and scratch strength ($\vec{S_s}$). In case of line-contact between the scratch tip and the surface of the test specimen, the scratch damage index is represented on the basis of degree of scratch damage ($\Delta D$) and scratch resistance ($\vec{R_s}$).

The method for quantitative evaluation of scratch-induced damage on polymeric and coating materials according to the present invention allows evaluation of a degree of scratch-induced surface damage formed on the material surface as a quantitated value. By providing objectivity, it can reduce evaluation errors resulting from the operator or the evaluation environment. Accordingly, a reliable evaluation of scratch resistance is ensured.

Further, the method according to the present invention allows an objective evaluation of scratch-induced surface damage of polymeric and coating materials by representing the degree of scratch-induced damage as a quantitated scratch damage index (SDI).

Other features and aspects will be apparent from the following detailed description, the drawings, and the claims.

## BRIEF DESCRIPTION OF THE DRAWINGS

The above and other objects, features and advantages of the present invention will become apparent from the following description of preferred embodiments given in conjunction with the accompanying drawings, in which:

FIG. 1 is a flow diagram comparing a method for quantitative evaluation of scratch-induced damage according to an embodiment of the present invention with an existing evaluation method;
FIG. 2 shows scratches intentionally induced on a material surface under a constant force condition according to an embodiment of the present invention;

## DETAILED DESCRIPTION OF EMBODIMENTS

The advantages, features and aspects of the present invention will become apparent from the following description of the embodiments with reference to the accompanying drawings, which is set forth hereinafter. The present invention may, however, be embodied in different forms and should not be construed as limited to the embodiments set forth herein. Rather, these embodiments are provided so that this disclosure will be thorough and complete, and will fully convey the scope of the present invention to those skilled in the art. The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

The present invention provides a method according to claim 1 for quantitative evaluation of mar- or scratch-induced damage formed on the surface of polymeric and coating materials, in which a scratch damage is formed under a constant load condition using a scratch tip capable of line-contact or line-contact with a material surface. The degree of the scratch damage is represented as color difference or color coordinates, and a quantitated scratch damage index (SDI) is represented by a combination of the color difference or color coordinates and a load applied to the material surface.

As used herein, the term polymeric and coating materials refer to polymeric materials and coating materials formed on the surface of various materials. Hereinafter, the polymeric and/or coating material will be simply referred to as "material".

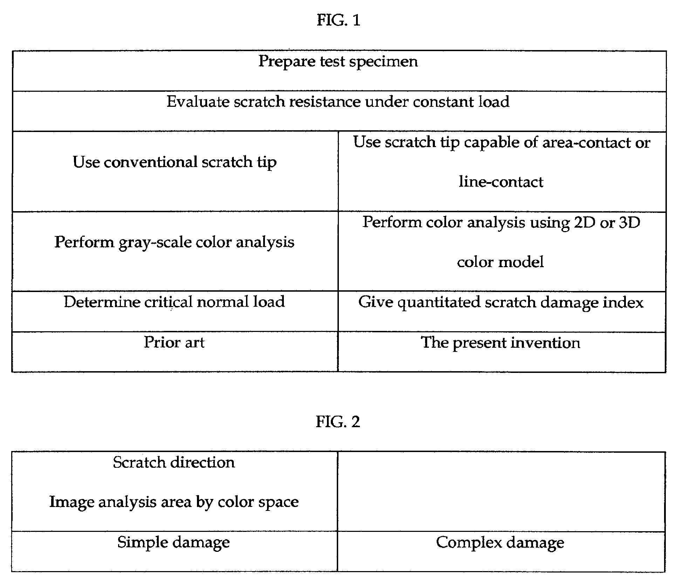

As illustrated in FIG. 1, in order to evaluate scratch resistance against a stress applied to a material surface under a constant force condition via a scratch test, a test specimen of the selected material is prepared first. Then, a scratch damage is intentionally induced on the surface of the test specimen.

A conventional scratch generator may be used to induce the scratch damage. In an embodiment of the present invention, UMT-2 (Center for Tribology, Inc.) was used as the scratch generator.

The scratch generator has a scratch tip capable of being in area-contact or line-contact with the material surface. Preferably, the scratch tip may be made of a material having hardness greater than that of the polymeric and coating materials, for example, metal, mineral or inorganic material.

In an embodiment of the present invention, the scratch tip contacts with the material surface under a constant force condition and acts to apply a stress to form a scratch.

The surface damage induced by the scratch tip may be two types. The first type is a simple damage, in which scratches or mars are formed along one direction on the material surface by the scratch tip. The other type is a complex damage, in which further scratches or mars having another direction with the simple damage is added to the simple damaged surface. The method according to the present invention evaluates both types of scratch damage.

As illustrated in FIG. 2, the complex scratch damage may be formed by inducing a scratch damage along a longitudinal direction on a material surface on which a scratch damage has been already induced along a transverse direction.

FIG. 2 schematically shows scratch damages intentionally induced on a material surface using a scratch;

Through area-contact or line-contact with the surface, the scratch tip is applied with a constant force on the material surface so as to induce a mar or scratch. If area-contact is desired, the contact portion of the scratch tip may have a polygonal shape, e.g. triangular or rectangular shape, or circular shape.

According to the present invention, after the surface damage is induced on the surface of the test specimen, a digitized image of the surface damage area is obtained, for example, using a scanner.

Preferably, the surface damage area is scanned at a 24-bit color scale with a resolution of 600 * 600 dpi or better to obtain a clear and distinct image of the material surface. In an embodiment of the present invention, Perfection V700 Photo (Epson) may be used to obtain the image.

Thus obtained digital image of the surface damage area of the scratched test specimen is analyzed using a color analysis software.

The color analysis software may be a software capable of obtaining color coordinates using various 2-dimensional or 3-dimensional color models. In an embodiment of the present invention, degree of the scratch-induced damage on the material surface and scratch resistance of the material may be evaluated using the software.

In an embodiment of the present invention, the commercially available color analysis software QWin is used and the analysis result is represented as color coordinates of RGB and HSI 3-dimensional color models.

The color coordinates are composed of three components to express color for each pixel of the scanned (digitized) image. For example, in an RGB color model, the color coordinate is represented with red (R), green (G) and blue (B) values, and in an HSI color model, it is represented with hue (H), saturation (S) and intensity (I) values.

Preferably, the color analysis software is one capable of performing continuous measurement on the width and length of the whole scratch formed on the material surface as well as arbitrary selective measurement on the damage area.

Preferably, when the scratch tip is in line-contact with the surface of the test specimen, the color analysis software may represent the color coordinates of each row j of the image corresponding to the scratch direction as an average value of all the color coordinate values of the row j, for the whole or arbitrarily selected damaged area of the material surface.

More specifically, the color analysis software may classify the pixels of the image along the scratch direction for the whole or arbitrarily selected area into different rows j and represent the color coordinates of each row j of the image corresponding to the scratch direction as an average value of all the color coordinate values of the row j.

Instead of scanning the damage area of the material surface, the surface damage may be directly represented as color difference or color coordinates using a color analysis profiler such as a spectrocolorimeter, a colorimeter, a color reader, or the like.

The color difference is represented as the difference in color coordinates between the area where the mar or scratch was formed and the other area.

In an embodiment of the present invention, a CM-3700d spectrocolorimeter (Konica Minolta) may be used.

Preferably, the color analysis using the spectrocolorimeter is performed under a standard condition of D65 standard illuminant, d/8 diffuse illumination and specular component excluded (SCE) mode, for objective and reasonable measurement.

Based on the color difference or color coordinates, a scratch damage index is represented as a quantitated value of the scratch-induced surface damage.

The scratch damage index is represented by degree of scratch damage ($\Delta$D), scratch strength ($\overrightarrow{S_s}$) and scratch resistance ($\overrightarrow{R_s}$). The representation may be different depending on the kind of the scratch tip. For example, if the scratch tip contacts the material surface with a constant area, i.e. area-contact, the scratch damage index may be represented by [$\Delta$D, $\overrightarrow{Ss}$]. And, if the scratch tip contacts linearly with the material surface, i.e. line-contact, it may be represented by [$\Delta$D, $\overrightarrow{R_s}$].

Here, the degree of scratch damage ($\Delta$D) is calculated as the Euclidean distance between the color coordinates of the scratch-induced portion x and the intact portion y to give a quantitated value of the scratch-induced surface damage. The distance between the two portions is calculated by Equation 1. The scratch strength ($\overrightarrow{S_s}$) and the scratch resistance ($\overrightarrow{R_s}$) are calculated by Equations 2 and 3.

## Equation 1

$$\Delta D(x,y) = \| x - y \| = \sqrt{\sum_{i=1}^{n}(x_i - y_i)^2}$$

## Equation 2

$$\overrightarrow{S_s} = \overrightarrow{F_s}/A$$

## Equation 3

$$\overrightarrow{R_s} = \overrightarrow{F_s}/l$$

wherein A is the contact area between the scratch tip and the material surface, and $l$ is the contact length between the scratch tip and the material surface.

The scratch force ($\overrightarrow{F_s}$) applied to the surface is defined as the summation of two orthogonal vectors, normal force ($\overrightarrow{F_n}$) and resulting tangential force ($\overrightarrow{F_t}$) as shown in Equation 4.

Here, the normal force ($\overrightarrow{F_n}$) is a force applied by the scratch tip in a direction perpendicular to the material surface, and the tangential load ($\overrightarrow{F_t}$) is a force applied by the scratch tip in a direction parallel to the material surface.

## Equation 4

$$\overrightarrow{F_s} = \overrightarrow{F_n} + \overrightarrow{F_t}$$

Raw data are obtained from a scratch test under a constant load condition according to an embodiment of the present invention.

In the present invention, there is no specific limitation on the thickness of the test specimen. However, a plate-type test specimen having a thickness 10 mm or smaller and a length 70 mm or longer is preferred.

**EXAMPLES**

The examples and experiments will now be described. The following examples and experiments are for illustrative purposes only and not intended to limit the scope of this disclosure.

Example 1

A 3-mm thick, plate-type polypropylene composite material was used as a test specimen for evaluation of scratch damage.

Mar and scratch of simple damage

A 50-mm long scratch was formed along one direction on the test specimen using a scratch generator. The scratching speed (the speed at which the scratch damage was formed) was fixed at 1 mm/s, and the load to form the scratch was varied at 10 N, 20 N and 30 N.
After the surface damage was formed on the surface of the test specimen, a digital image was obtained using a flatbed scanner.
Digitized images of the mar- and scratch-induced simple damages are obtained using the flatbed scanner.
In this example, about 90% of the total width of the scratch was arbitrarily selected, and color analysis was performed using two 3-dimensional color models of RGB and HSI.
As shown in Table 1, as the constant load applied to the test specimen increased, so did the color coordinate values of the RGB color model. In contrast, in the HSI color model, the intensity ($I_m$) and the saturation ($S_m$) values showed opposite behaviors with the increase of the constant load. That is to say, as the constant load applied to the test specimen increased, the intensity ($I_m$) value increased but the saturation ($S_m$) decreased.
From a combination of the color coordinates presented in Table 1 with the applied load, the quantitated 'scratch damage index (SDI)' was calculated and given in Table 2.
As seen from Tables 1 and 2, the method for evaluation of the scratch-induced surface damage according to the present invention gives the degree of surface damage as a digitized value.
In Tables 1 and 3 that follow, "control" means a test condition with no scratch damage formed.

Table 1

| Test condition | Area-contact | | | | Line-contact | | | |
|---|---|---|---|---|---|---|---|---|
| | RGB | | HSI | | RGB | | HSI | |
| | $G_m$ | $R_m$ | $I_m$ | $S_m$ | $G_m$ | $R_m$ | $I_m$ | $S_m$ |
| Control | 40±1.8 | 30±1.8 | 40±1.8 | 63±3.1 | 40±1.8 | 30±1.8 | 40±1.8 | 63±3.1 |
| 10 N | 40±1.3 | 32±1.4 | 40±1.2 | 63±2.5 | 56±2.2 | 46±2.2 | 56±2.2 | 47±2.4 |
| 20 N | 44±2.3 | 34±2.3 | 43±1.9 | 59±1.8 | 89±6.3 | 79±6.2 | 88±4.5 | 31±2.0 |
| 30 N | 105±6.3 | 95±6.2 | 105±6.3 | 25±1.8 | 136±6.9 | 126±7.1 | 138±5.9 | 19±1.8 |

Table 2

| Test condition | Scratch damage index (SDI) | | | |
|---|---|---|---|---|
| | Area-contact | | Line-contact | |
| | RGB [ΔD, $\overrightarrow{S_s}$] | HSI [ΔD, $\overrightarrow{S_s}$] | RGB [ΔD, $\overrightarrow{R_s}$] | HSI [ΔD, $\overrightarrow{R_s}$] |
| 10 N | [2.0, 12.8] | [0, 12.8] | [22.6, 10.3] | [22.6, 10.3] |
| 20 N | [5.7, 25.3] | [5.0, 25.3] | [69.3, 21.5] | [57.7, 21.5] |
| 30 N | [91.9, 40.0] | [75.3, 40.0] | [135.8, 34.1] | [107.4, 34.1] |

Mar and scratch of complex damage

First, 20 simple damages were formed on the test specimen with 3 mm intervals along a transverse direction using a scratch tip capable of line-contact with the material surface. Then, 20 scratch damages were formed with 3 mm intervals in a longitudinal direction to induce complex damages.

After the complex damages were induced on the test specimen color analysis was performed using a spectrocolorimeter under a condition of D65 standard illuminant, d/8 diffuse illumination and specular component excluded (SCE) mode. A measuring mirror having a diameter of 25.4 mm was used. Then, the degree of the damage of the surface of the test specimen by the complex damage was represented as color difference ($\Delta$ L) by comparing the color coordinates of scratched portion with those of intact portion, using the L*a*b* color model.

Of course, as in the simple damage, the degree of mar and scratch by the complex damage may also be quantitated using a color analysis software after scanning the complex damage area to obtain an image.

Table 3 shows the degree of the damage of the surface of the test specimen by the complex damage as mean and standard deviation of the color difference ($\Delta$L).

Table 3

| Test condition | Area-contact |
| --- | --- |
| | $\Delta$ L (change in lightness) |
| Control | - |
| 10 N | $2.7\pm0.4$ |
| 20 N | $4.5\pm0.4$ |

The scratch-induced surface damage analysis in Example 1 gives objective and quantitated values, with less evaluation errors resulting from the operator or the evaluation environment and high reliability and reproducibility.

As described above, the present invention provides a method for quantitative evaluation of mar- or scratch-induced damage formed on the surface of polymeric and coating materials, whereby a scratch damage is intentionally formed using a scratch tip capable of line-contact or line-contact with a material surface, the degree of the scratch damage is represented as color difference or color coordinates after obtaining a digitized image of the surface damage area by scanning and using a color analysis software or using a color analysis profiler such as a spectrocolorimeter, a colorimeter or a color reader without acquisition of the digitized image, and a quantitated scratch damage index is calculated therefrom.

By performing color analysis on the surface of polymeric and coating materials on which scratch damage is formed and providing the evaluation result as a quantitated scratch damage index, the present invention allows quantitative evaluation of the scratch-induced surface damage.

The present invention is applicable without regard to the color or surface pattern of the material surface. And, the operator may randomly select the color model for analysis of the surface damage without limitation.

**Claims**

1. A method for quantitative evaluation of scratch-induced damage formed on the surface of polymeric and coating materials, comprising:

preparing a test specimen of polymeric and coating materials;
inducing a scratch damage on the surface of the test specimen by applying a scratch force $\overrightarrow{F_s}$ with a scratch tip either in area-contact with the material surface, wherein A is the contact area between the scratch tip and the material surface or in line-contact with the material surface, wherein l is the contact length between the scratch tip and the material surface;
representing the scratch damage formed on the test specimen as corresponding color coordinates by either obtaining a color image by scanning the scratch damage formed on the surface of the test specimen or by acquiring the color coordinates or the color difference of the scratched and intact portion using a color analysis profiler; and
analysing the scratch damage formed on the surface of the specimen using a 2-dimensional or 3-dimensional color model:

representing a quantitated scratch damage index from a combination of the force $\overrightarrow{F_s}$ applied to the surface of the test specimen and the color coordinates corresponding to the scratch damage,

**characterised in that** the scratch index is represented by the degree of scratch damage (ΔD) and scratch strength ($\vec{S_s}$) in case of area-contact, and is represented by the degree of scratch damage (ΔD) and scratch resistance ($\vec{R_s}$) in case of line-contact,

wherein said degree of scratch damage (ΔD) is calculated as the Euclidian distance between the color coordinates of the scratch induced portion x and the intact portion y:

$$\triangle D(x,y) = \|x - y\| = \sqrt{\sum_{i=1}^{n}(x_i - y_i)^2}$$

wherein n is the dimension of the color model
and wherein said scratch strength ($\vec{S_s}$) is calculated by

$$\vec{S_s} = \vec{F_s} / A$$

and said scratch resistance ($\vec{R_s}$) is calculated by

$$\vec{R_s} = \vec{F_s} / l$$

2. The method for quantitative evaluation of scratch-induced damage on polymeric and coating materials according to claim 1, wherein said inducing the scratch damage comprises forming the scratch damage by applying a constant load to the surface of the test specimen.

3. The method for quantitative evaluation of scratch-induced damage on polymeric and coating materials according to claim 1, wherein the scratch damage is in a form of simple damage, in which scratches are formed along one direction, or in a form of complex damage, in which further scratches having another direction with the simple damage is added to the simple damaged test specimen..

4. The method for quantitative evaluation of scratch-induced damage on polymeric and coating materials according to claim 1, wherein the color analysis software is one capable of performing color analysis as a whole or as a part of the surface damage area of the test specimen.

5. The method for quantitative evaluation of scratch-induced damage on polymeric and coating materials according to claim 4, wherein the color analysis software is capable of performing continuous measurement on the width and length of the whole scratch formed on the surface of the test specimen.

6. The method for quantitative evaluation of scratch-induced damage on polymeric and coating materials according to claim 4 , wherein, when a scratch tip is in line-contact with the surface of the test specimen, the color analysis software represents the color coordinates of each row j of the image corresponding to the scratch direction as an average value of all the color coordinate values of the row j.

**Patentansprüche**

1. Verfahren zur quantitativen Bewertung von durch Kratzen induzierter auf der Oberfläche von Polymer- und Beschichtungsmaterialien gebildeter Schädigung, umfassend:

Herstellen eines Test-Probenstücks von Polymer- und Beschichtungsmaterialien;
Induzieren einer Kratz-Schädigung auf der Oberfläche des Test-Probenstücks durch Anwenden einer Kratz-Kraft $\vec{F_s}$ mit einer Kratz-Spitze entweder in Flächen-Kontakt mit der Material-Oberfläche, wobei A die Kontakt-Fläche zwischen der Kratz-Spitze und der Material-Oberfläche ist, oder in Linien-Kontakt mit der Material-Oberfläche, wobei 1 die Kontakt-Länge zwischen der Kratz-Spitze und der Material-Oberfläche ist;
Wiedergeben der auf dem Test-Probenstück gebildeten Kratz-Schädigung als entsprechende Farb-Koordinaten

EP 2 372 339 B1

durch entweder Gewinnen eines Farbbilds durch Abtasten der auf der Oberfläche des Test-Probenstücks gebildeten Kratz-Schädigung oder durch Aufnehmen der Farb-Koordinaten oder des Farb-Unterschieds des gekratzten und intakten Anteils unter Verwendung eines Color-Analysis-Profilers; und Analysieren der auf der Oberfläche des Probenstücks gebildeten Kratz-Schädigung unter Verwendung eines 2-dimensionalen oder 3-dimensionalen Farb-Modells:

Wiedergeben eines quantifizierten Kratz-Schädigungsindex aus einer Kombination der auf die Oberfläche des Test-Probenstücks angewendeten Kraft $\vec{F_s}$ und den Farb-Koordinaten entsprechend der Kratz-Schädigung,

**dadurch gekennzeichnet, dass** der Kratzindex durch den Grad von Kratz-Schädigung (ΔD) und Kratzhärte ($\vec{S_s}$) im Fall von Flächen-Kontakt wiedergegeben wird, und durch den Grad von Kratz-Schädigung (ΔD) und Kratz-Beständigkeit ($\vec{R_s}$) im Fall von Linien-Kontakt wiedergegeben wird,

wobei der Grad von Kratz-Schädigung (ΔD) als der Euklidische Abstand zwischen den Farb-Koordinaten des durch Kratzen induzierten Anteils x und des intakten Anteils y berechnet wird:

$$\triangle D(x,y) = \| x - y \| = \sqrt{\sum_{i=1}^{n}(x_i - y_i)^2}$$

wobei n die Abmessung des Farb-Modells ist
und wobei die Kratzhärte ($\vec{S_s}$) berechnet wird durch

$$\vec{S_s} = \vec{F_s}/A$$

und die Kratz-Beständigkeit ($\vec{R_s}$) berechnet wird durch

$$\vec{R_s} = \vec{F_s}/l.$$

2. Verfahren zur quantitativen Bewertung von durch Kratzen induzierter Schädigung auf Polymer- und Beschichtungsmaterialien nach Anspruch 1, wobei das Induzieren der Kratz-Schädigung Bilden der durch Anwenden einer konstanten Last auf die Oberfläche des Test-Probenstücks umfasst.

3. Verfahren zur quantitativen Bewertung von durch Kratzen induzierter Schädigung auf Polymer- und Beschichtungsmaterialien nach Anspruch 1, wobei die Kratz-Schädigung in Form von einfacher Schädigung, in welcher die Kratzer entlang einer Richtung gebildet werden, oder in Form von einer komplexen Schädigung vorliegt, in welcher weitere Kratzer mit einer anderen Richtung zu der einfachen Schädigung dem einfach geschädigten Test-Probenstück zugefügt wird.

4. Verfahren zur quantitativen Bewertung von durch Kratzen induzierter Schädigung auf Polymer- und Beschichtungsmaterialien nach Anspruch 1, wobei die Farb-Analysen-Software zum Ausführen einer Farb-Analyse als ein Ganzes oder als ein Teil der Oberflächen-Schädigungsfläche des Test-Probenstücks in der Lage ist.

5. Verfahren zur quantitativen Bewertung von durch Kratzen induzierter Schädigung auf Polymer- und Beschichtungsmaterialien nach Anspruch 4, wobei die Farb-Analysensoftware zum Ausführen einer kontinuierlichen Messung auf der Breite und Länge des gesamten auf der Oberfläche des Test-Probenstücks gebildeten Kratzers in der Lage ist.

6. Verfahren zur quantitativen Bewertung von durch Kratzen induzierter Schädigung auf Polymer- und Beschichtungsmaterialien nach Anspruch 4, wobei, wenn eine Kratz-Spitze mit der Oberfläche des Test-Probenstücks in Linien-Kontakt ist, die Farb-Analysensoftware die Farb-Koordinaten von jeder Reihe j des Bildes entsprechend der Kratz-Richtung als ein mittlerer Wert von allen Farb-Koordinaten-Werten der Reihe j wiedergibt.

**Revendications**

1. Procédé d'évaluation quantitative de dommage créé par une rayure formée sur la surface de matériaux polymères et de revêtement, comprenant :

   la préparation d'un spécimen d'essai de matériaux polymères et de revêtement ;
   la création d'un dommage de rayure sur la surface du spécimen d'essai par application d'une force de rayure $\vec{Fs}$ avec une pointe de rayure soit en contact de zone avec la surface de matériau, où A est la zone de contact entre la pointe de rayure et la surface de matériau, soit en contact de ligne avec la surface de matériau, où l est la longueur de contact entre la pointe de rayure et la surface de matériau ;
   la représentation du dommage de rayure formé sur le spécimen d'essai sous la forme de coordonnées de couleur correspondantes soit en obtenant une image en couleur en balayant le dommage de rayure formé sur la surface du spécimen d'essai soit en acquérant les coordonnées de couleur ou la différence de couleur de la portion rayée et intacte en utilisant un profileur d'analyse de couleur ; et
   l'analyse du dommage de rayure formé sur la surface du spécimen en utilisant un modèle de couleur bidimensionnel ou tridimensionnel ;
   la représentation d'un indice de dommage de rayure quantifié à partir d'une combinaison de la force $\vec{Fs}$ appliquée sur la surface du specimen d'essai et des coordonnées de couleur correspondant au dommage de rayure,
   **caractérisé en ce que** l'indice de rayure est représenté par le degré de dommage de rayure ($\Delta$D) et la ténacité à la rayure $\vec{Ss}$ en cas de contact de zone, et est représenté par le degré de dommage de rayure ($\Delta$D) et la résistanceà la rayure $\vec{Rs}$ en cas de contact de ligne,
   dans lequel ledit degré de dommage de rayure ($\Delta$D) est calculé sous la forme de la distance euclidienne entre les coordonnées de couleur de la portion créée par une rayure x et la portion intacte y :

$$\triangle D(x,y) = \| x - y \| = \sqrt{\sum_{i=1}^{n}(x_i - y_i)^2}$$

   dans lequel n est la dimension du modèle de couleur
   et dans lequel ladite ténacité à la rayure $\vec{Ss}$ est calculée par

$$\vec{S_s} = \vec{F_s} / A$$

   et ladite résistance à la rayure $\vec{Rs}$ est calculée par

$$\vec{R_s} = \vec{F_s} / l$$

2. Procédé d'évaluation quantitative de dommage créé par une rayure sur des matériaux polymères et de revêtement selon la revendication 1, dans lequel ladite création d'un dommage de rayure comprend la formation du dommage de rayure en appliquant une charge constante à la surface du specimen d'essai.

3. Procédé d'évaluation quantitative de dommage créé par une rayure sur des matériaux polymères et de revêtement selon la revendication 1, dans lequel le dommage de rayure a la forme d'un dommage simple, dans lequelles rayures sont formées le long d'une direction, ou a la forme d'un dommage complexe, dans lequeldes rayures supplémentaires ayant une autre direction par rapport au dommage simple sont ajoutées au spécimen d'essai à dommage simple.

4. Procédé d'évaluation quantitative de dommage créé par une rayure sur des matériaux polymères et de revêtement selon la revendication 1, dans lequel le logiciel d'analyse de couleur est capable de réaliser une analyse de couleur sous la forme de la totalité ou d'une partie de la zone de dommage de surface du spécimen d'essai.

5. Procédé d'évaluation quantitative de dommage créé par une rayure sur des matériaux polymères et de revêtement selon la revendication 4, dans lequel le logiciel d'analyse de couleur est capable de réaliser une mesure continue sur la largeur et la longueur de la totalité de la rayure formée sur la surface du spécimen d'essai.

6. Procédé d'évaluation quantitative de dommage créé par une rayure sur des matériaux polymères et de revêtement selon la revendication 4, dans lequel, lorsqu'une pointe de rayure est en contact de ligne avec la surface du spécimen d'essai, le logiciel d'analyse de couleur représente les coordonnées de couleur de chaque rangée j de l'image correspondant à la direction de rayure comme une valeur moyenne de toutes les valeurs de coordonnées de couleur de la rangée j.

FIG. 1

| Prepare test specimen | |
|---|---|
| Evaluate scratch resistance under constant load | |
| Use conventional scratch tip | Use scratch tip capable of area-contact or line-contact |
| Perform gray-scale color analysis | Perform color analysis using 2D or 3D color model |
| Determine critical normal load | Give quantitated scratch damage index |
| Prior art | The present invention |

FIG. 2

| Scratch direction<br><br>Image analysis area by color space | |
|---|---|
| Simple damage | Complex damage |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005300265 A

**Non-patent literature cited in the description**

- **J-I WEON et al.** *J. of Materials Sci.,* vol. 45 (10), 2649-2654